# EUROPEAN PATENT APPLICATION

(11) **EP 1 308 856 A2**
(43) Date of publication of application: **07.05.2003**
(21) Application number: 02024436.4
(22) Date of filing: 29.10.2002
(51) Int. Cl.: G06F 17/30

(54) **Information providing system and information providing server apparatus for use therein, information terminal unit, and information providing method using to user profile**

(30) Priority: 01.11.2001 JP 2001336339; 22.11.2001 JP 2001357142
(71) Applicant: MATSUSHITA ELECTRIC INDUSTRIAL CO., LTD., Kadoma-shi, Osaka 571-8501 (JP)
(72) Inventor: Hara, Noriyo, Setagaya-ku, Tokyo 154-0024 (JP)
(74) Representative: Balsters, Robert

(57) **Abstract**

In an information providing system connecting between a client to which contents are delivered and an information providing server apparatus for providing contents by a communication network, the client prepares a user file to present contents in a presentation form fitting to a preference of a user. The information providing server apparatus dynamically generates a transforming specification of contents according to the user profile, dynamically transforms contents according to the generated transforming specification and sends them to the client. When the user requests for delivery, the contents are dynamically reconstructed according to the user profile designated by the user. It is accordingly possible to provide contents to the user by a best suited way.

## Description

### Field of the Invention

The present invention relates to an information providing system utilizing the Internet or the like, an information providing server apparatus for use therein, an information terminal unit and an information description method according to user profile, and more particularly to an improvement in accessibility in order for easy use by many users.

### Background of the Invention

Recently, there is a rapid progress in communication network technology including the Internet. Users can access various and useful informations anytime and anywhere. On the other hand, the aged, the disabled or disabled, and those not skilled in operation of information appliances cannot catch up with the progress in the technology. There is a serious social problem of, what is called "digital divide", that they cannot access to the information, they have much difficulty to use the information or information apparatus, or they cannot use them. .

To resolve these problems, assistive softwares are developed, for example, the text enlarge software for aged who has difficulty to read small fonts on the screen, or the text reader that is convert text on screen to speech for the visually impaired
Furthermore some systems that provide appropriate contents according to the user profile are proposed. For example, JP-A-07-98708 proposes a document processing system that the font size of text is to be magnified in response to an user's intention or a translation or abstract is to be prepared.

Meanwhile, JP-A-244781 proposes an information access method that an information input/output part of itself, surrounding environment and use environment of the user are monitored to select an interface or data so that it can be presented on the information terminal unit suitably to the environment.

Also, JP-A-2000-222276 proposes a method that a plurality of conversion files are previously formed to convert Web contents in conformity to a client computer characteristic.

However, in JP-A-07-98708, no description is made on a function to provide alternative information. Furthermore, because an abstract or translation is made by the utilization of an external function, information is not always at the will of the information provider.

Meanwhile, the art described in JP-A-244781 requires an I/F server, data server and media conversion server, hence making the configuration large in scale. The invention described in JP-A-2000-222276, as a multiplicity of conversion files are needed, has difficulty in management thereof, thus raising a problem of incapability of dealing with in the event an optimal conversion file is not in existence.

Moreover, there are the following problems in the processing of the prior arts.

First, with the magnifying-glass function to magnify a part of screen, there is a difficulty upon grasping the entire of information.

Second, with the method of changing the text size by changing the on-screen font size and resolution, the number of characters for display on one screen is decreased to require scrolling, making operation complicate. Layout change results in possible illegibility.

Third, in the case of using text-reader software, when there is an expression relying upon a visual sensation, e.g. "As Shown in Figure" or "Red Button", information compensation is not satisfactorily available by a mere conversion into voice. Also, information compensation is not sufficiently done by merely switching the information output interface, e.g. screen and voice.

Fourth, in the case that the information user is a cognitive disabled, child or a person not native to an information describing language, it is impossible to provide satisfactory information by merely changing the character font size or switching the interface, such as changing screen output/audio output.

Fifth, there is a case that it is impossible to effectively use assistive softwares, such as for magnifying the screen or audibly reading out, due to a problem resulting from the provided information itself, e.g. a font size is designated or an alt tag is not attached to image information.

### Summary of the Invention

The present invention has been made in view of the foregoing problems, and it is an object to provide information accessible to any person by preparing previously contents with accessibility and re-architecting and providing dynamically contents fitting to a preference or individuality of a user.

The present invention provides the definitions of characteristic tags corresponding to the respective characteristics of information content, including a method for providing information such as font size, coloration, image size, layout, and a necessity/unnecessity of sound attach, level of explanation of content, sound attach and coping way with a KANJI character in the case of Japanese, to thereby previously describe in contents a characteristic tag and process upon designating the tag. Due to this, contents itself is previously prepared with accessibility to dynamically create a transforming specification according to a characteristic designated by a user and present the contents in compliance with the transforming specification.

### Brief Description of the Drawings

Fig. 1 is a concept view showing an overall configuration of an information providing system according to the present invention;
Fig. 2 is a block diagram showing a transmission/reception configuration of the information providing system according to a first embodiment of the present invention;
Fig. 3A is a concept view showing an example of a profile setting screen in the first embodiment;
Fig. 3B is a concept view showing list boxes on the profile setting screen;
Fig. 4 is a concept view explaining a profile setting method in the first embodiment;
Fig. 5A is a concept view explaining a description of a ud (universal design) tag in the first embodiment;
Figs. 5B and 5C are concept views explaining an HTML after prepared with the user profile in the first embodiment;
Figs. 5D and 5E are concept views explaining a display of contents in the first embodiment;
Fig. 6A is a concept view explaining another description of a ud tag in the first embodiment;
Figs. 6B - 6D are concept views explaining a display of another example of contents in the first embodiment;
Fig. 7A is a concept view explaining another description of contents transformed in the first embodiment;

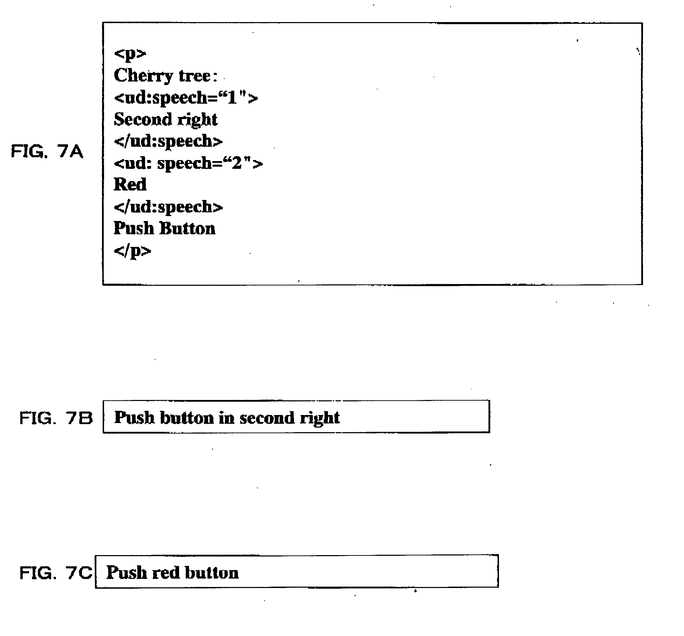

Figs. 7A- 7C are concept views explaining presentation of a sound attach in the first embodiment;

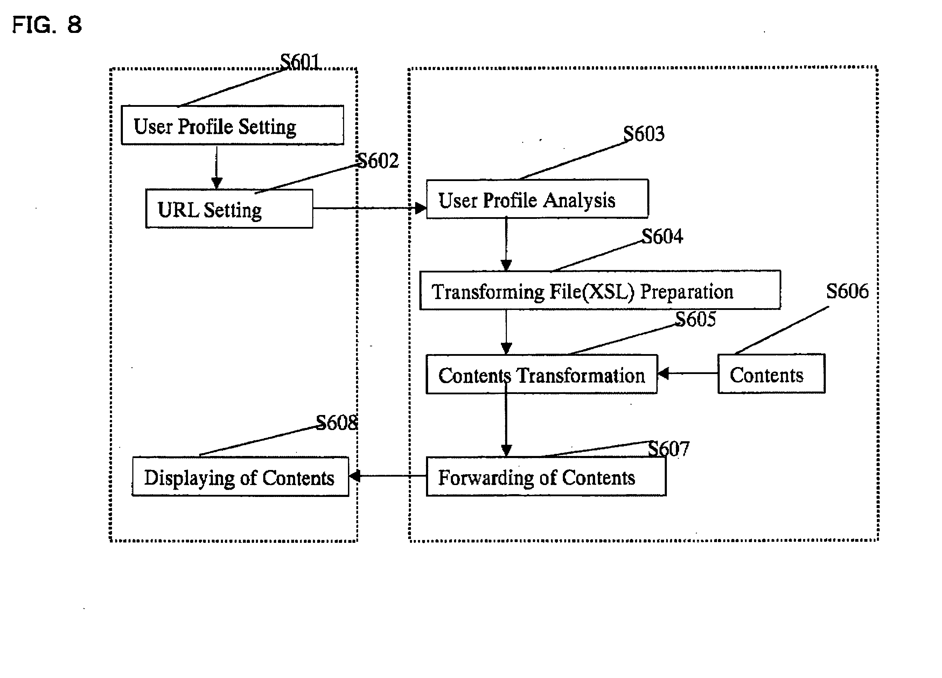

Fig. 8 is a flow chart showing a flow of signal processing in the first embodiment;

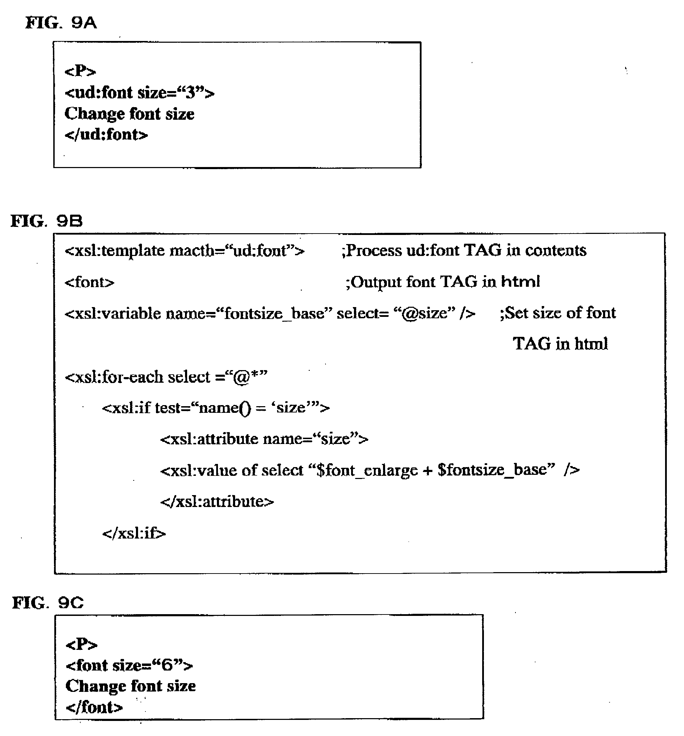

Fig. 9A is a concept view explaining a description of another example of ud tag in the first embodiment;
Fig. 9B is a concept view explaining a description of an XSL in the first embodiment;
Fig. 9C is a concept view explaining a description of a content transformed in the first embodiment;

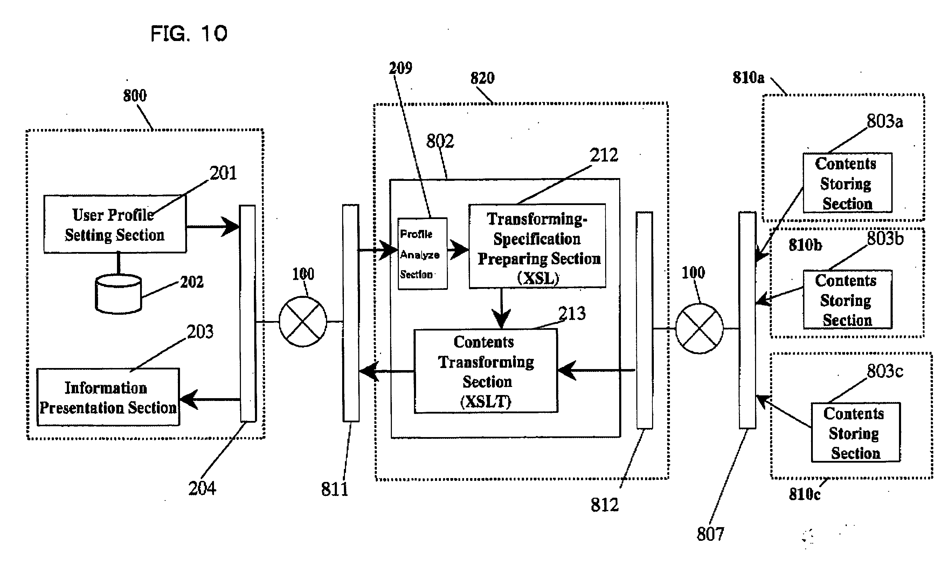

Fig. 10 is a block diagram showing a transmission/reception configuration of an information providing system according to a second embodiment of the invention;

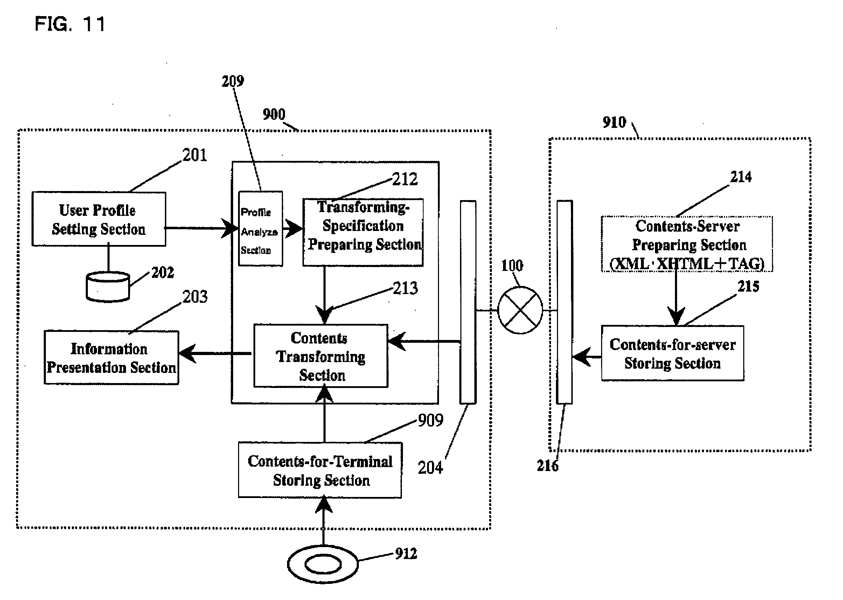

Fig. 11 is a block diagram showing a transmission/reception configuration of an information providing system according to a third embodiment of the invention;

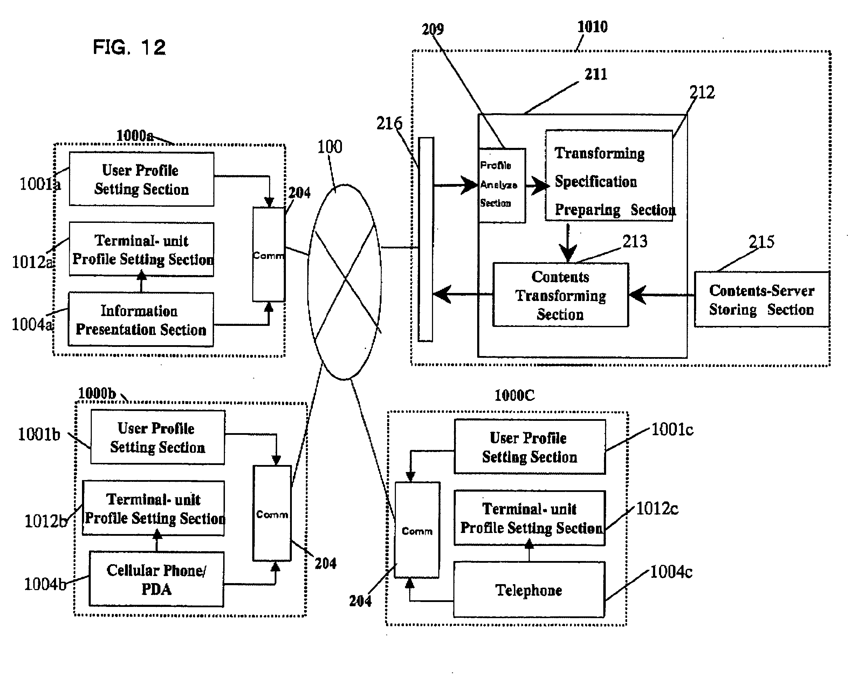

Fig. 12 is a block diagram showing a transmission/reception configuration of an information providing system according to a fourth embodiment of the invention;

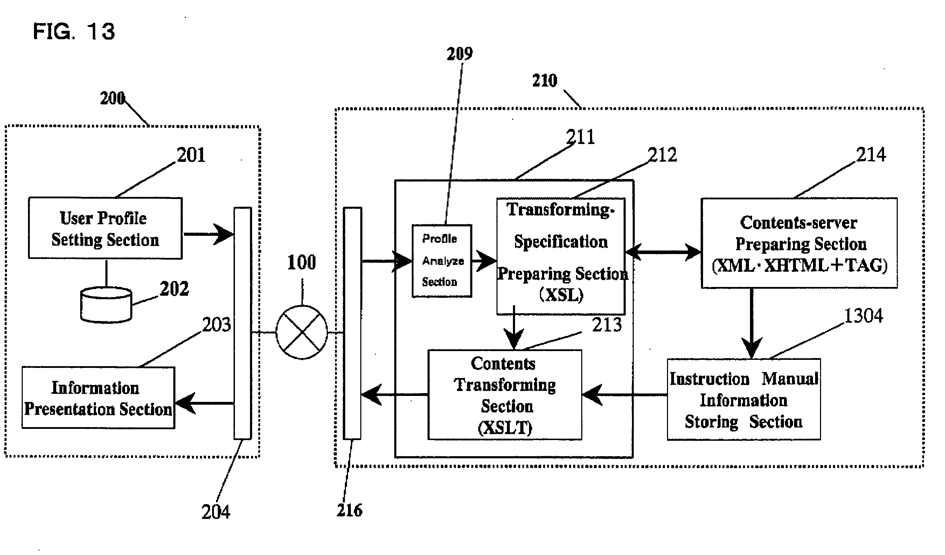

Fig. 13 is a block diagram showing an instruction manual information providing system according to a fifth embodiment of the invention;

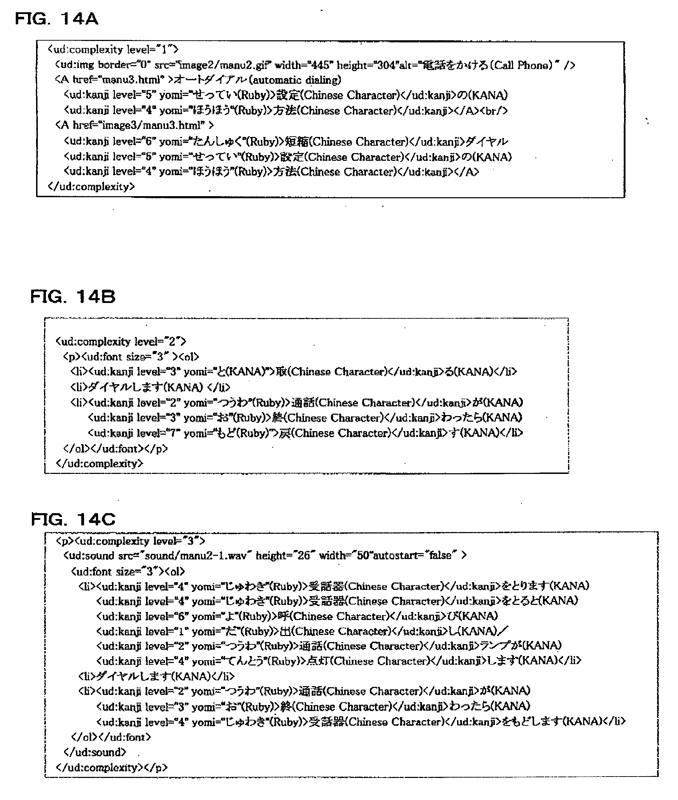

Figs. 14A - 14C are views each corresponding to a description level of instruction manual information in the fifth embodiment of the invention; and

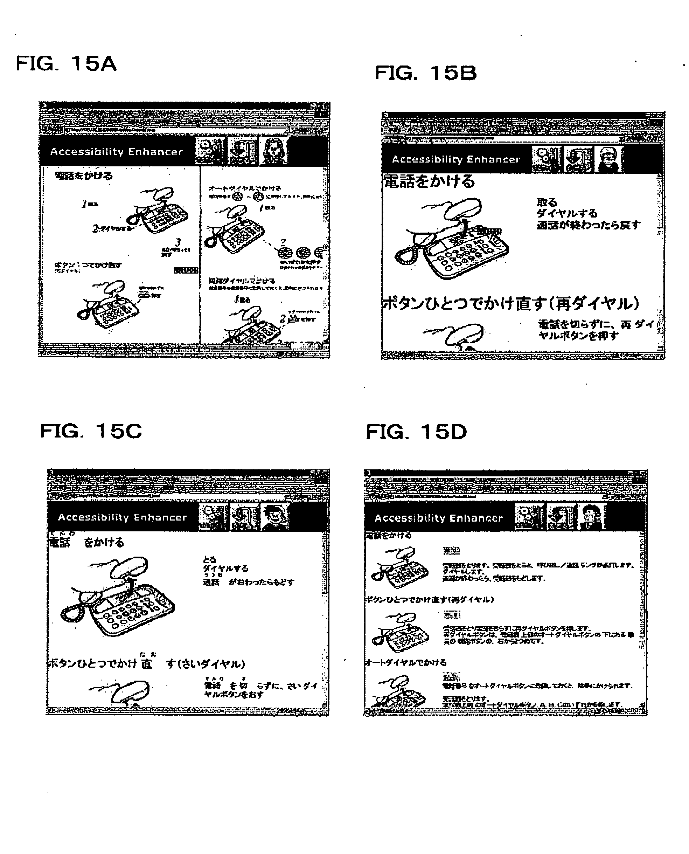

Figs. 15A - 15D are concept views each showing a display example of an instruction manual in the fifth embodiment of the invention.

### Description of the Exemplary Embodiment

Exemplary embodiments of the present invention are demonstrated hereinafter with reference to the accompanying drawings.

### 1. First Exemplary Embodiment

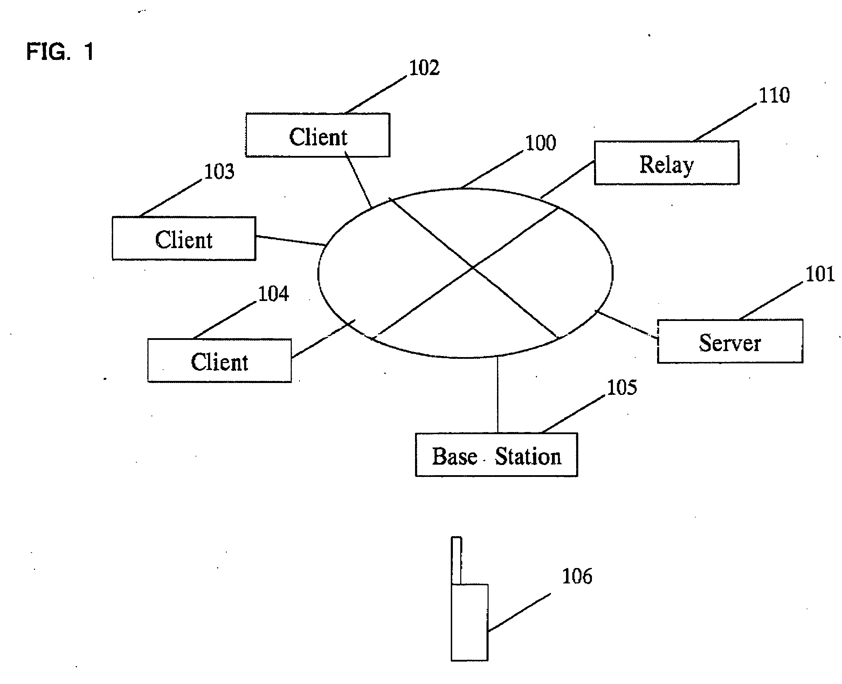

Fig. 1 shows an overall view of an information providing system according to the present invention. The information providing server apparatus 101 and the clients 102, 103, 104, as information terminal unit, are connected through a network 100 such as the Internet. In the case the client is a personal digital assistant 106, connection is made further from the network 100 to the personal digital assistant 106 by way of a base station 105. The information providing server 101 is to deliver information on the basis of a user profile describing how to present information based on a preference previously set by a user. A relay apparatus 110 is set up, where necessary, i.e. in such a case that the client 102, 103, 104 or personal digital assistant 106 is located distant from the information providing server apparatus 101. The information, from the information providing server apparatus 101, is delivered onto the client 102, 103, 104 or personal digital assistant 106 via the relay 110.

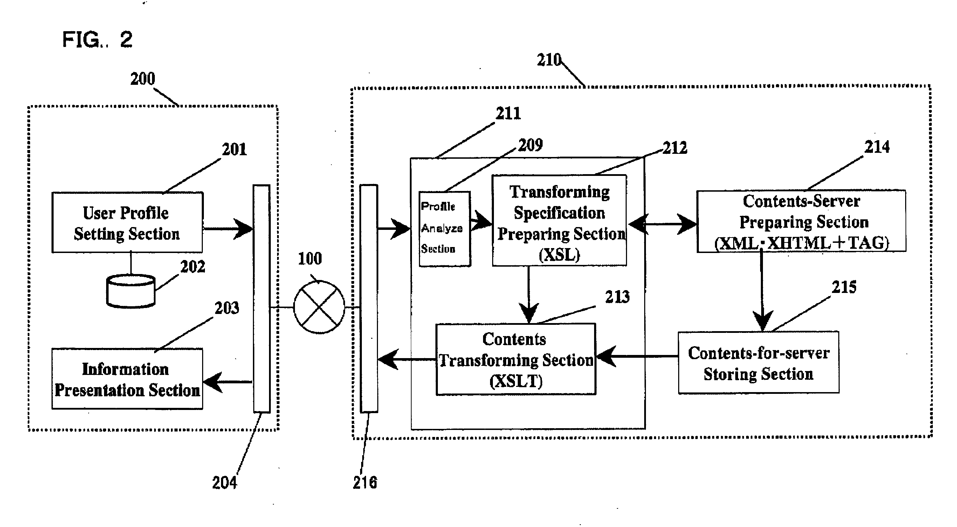

Fig. 2 shows a detail of the information providing server apparatus 101 and the client 102 - 104, as an information terminal unit, or the personal digital assistant 106.

The information terminal unit 200 corresponds to the client 102 - 104 or personal digital assistant 106 of Fig. 1 while the information providing server apparatus 210 to the server 101 of Fig. 1. The information terminal unit 200 has a user profile setting section 201 to generate a user profile describing how to present information corresponding to a user' s preference and individuality and a characteristic of the information terminal unit 200, a user profile storing section 202 to store user profiles generated, an information presentation section 203 to present the information delivered from the information providing server apparatus 210 to the user by the use of a monitor or speaker, and a communicating section 204 to carry out communications with the information providing server apparatus 210 via the network 100.

On the other hand, the information providing server apparatus 210 has a contents-server transforming section 211 to transform contents on the basis of a user profile, a contents-server preparing section 214 to prepare contents described by structured description data, a contents-server storing section 215 to store contents, and a communication section 216 to carry out communications with the information terminal unit 200 by way of the network 100. The contents-server transforming section 211 has a user-profile analyzing section 209 to analyze a user profile from the information terminal unit 200, a transforming-specification (XSL) preparing section 212 to prepare the user profile analyzed by the user-profile analyzing section 209 and the contents from the contents-server preparing section 214 into an XSL-transforming (XSLT) specification, and contents transforming section (XSLT) 213 to transform the contents from the contents-server storing section 215 with the XSL specification on the basis of a user profile.

Explanation is now made on the operation. First explained is a method to prepare a user profile by the user-profile setting section 210 of the information terminal unit 200.

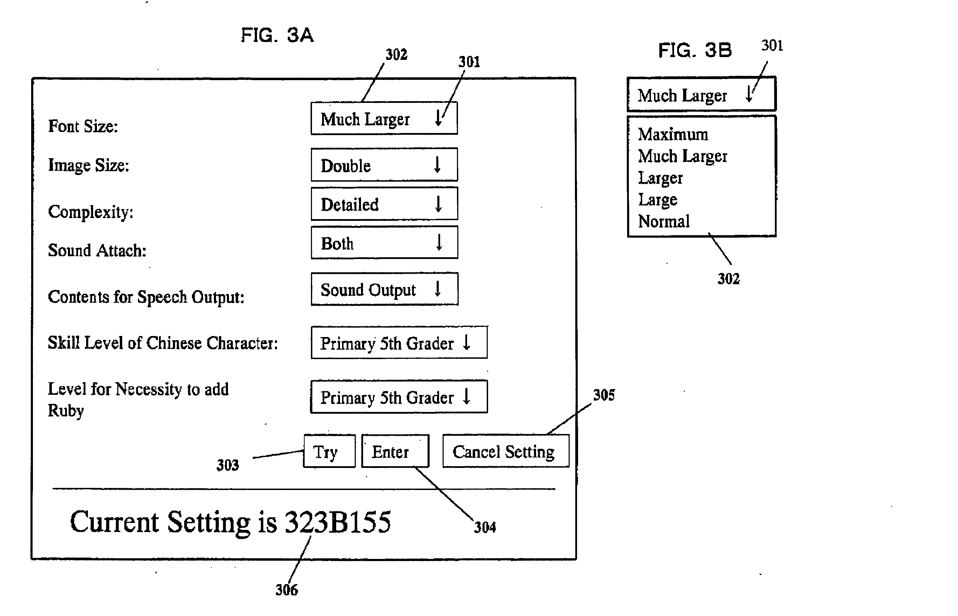

Fig. 3A shows a user-profile input screen while Fig. 3B shows a list box for entering a user profile. In this embodiment, the list box has alternatives in each of input items, as follows.
Font size:
   five levels of
      4. maximum
      3. much larger
      2. larger
      1. large
      0. normal
Image size:
   three levels of
      1. equal size
      2. double
      3. treble
Complexity:
   three levels of
      1. synopsis
      2. normal
      3. detaile
Sound attach:
   three levels of
      1. both B
      2. voice only S
      3. text only T
Contents for speech output:
   two levels of
      0. content for text
      1. content for sound attach
Skill level in Chinese character:
   0. transform every Chinese character into hiragana (Japanese cursive character; hereafter called KANA);
   1. transform into KANA in primary first grader level
   2. transform into KANA in primary second grader level
   3. transform into KANA in primary third grader level
   4. transform into KANA in primary fourth grader level
   5. transform into KANA in primary fifth grader level
   6. transform into KANA in primary sixth grader level
   7. not transform into KANA
Level for Necessity of Adding Ruby to Chinese character for pronunciation:
   0. Ruby to every Chinese character
   1. Ruby in primary first grader level
   2. Ruby in primary second grader level
   3. Ruby in primary third grader level
   4. Ruby in primary fourth grader level
   5. Ruby in primary fifth grader level
   6. Ruby in primary sixth grader level
   7. not Ruby

In the Level for Necessity of Adding Ruby to Chinese character, it is possible to replace Chinese characters with KANA instead of addition of Ruby.

For a user profile, a user-profile-input "↓" button 301 is clicked for each item in the user profile setting section 201 to make a selection in a list box 302 thereof. Selection is made for presentation form to fit to a user's preference. For example, concerning input item "Font size", in case "↓" button 301 is clicked, a list box 302 comes into display. When "Much Larger" in the same is clicked as shown in Fig. 3B, font size is fixed to "Much Larger" as shown in Fig. 3A. Input can be made on other items, similarly.

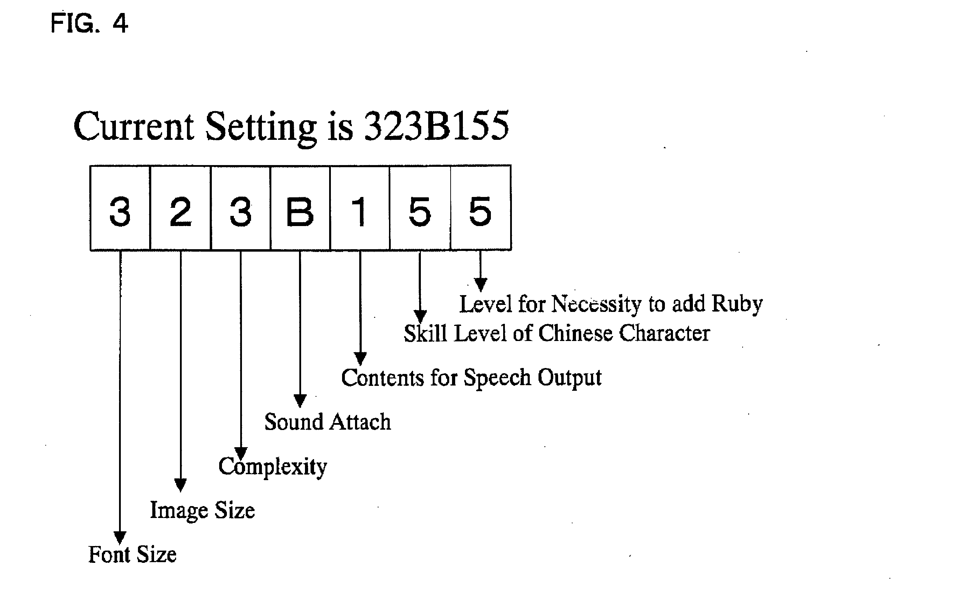

After input to the final, when Enter button 304 is clicked, a user profile is generated. The content entered is stored in the user profile storing section 208. The content entered can be displayed, on a screen, by numerals/signs 306 in an alphanumeric character string "323B155" representative of the levels as selected in each item. The numerals/signs are in a relationship of correspondence as shown in Fig. 4.

When test-displaying the profile thus set, "Try Button" 303 is clicked. When canceling the setting, "Setting Cancel Button" 305 is clicked to clear off the setting.

The user file thus set is to be forwarded to the information providing server apparatus 210 when the contents are requested to deliver. However, the prepared user file may be forwarded, as a Cookie that is an electronic information file containing the personal information from a person who have browsed a homepage, onto the information providing server apparatus 210 via the network 100. Cookie is a contrivance that a Web site provider is allowed to temporarily save an electronic information file containing personal information onto a user's computer via a Web browser. With Cookie, information about a user, date-and-hour of the last visit to the site, visit count to the site and so on can be presented. In case setting is once done, the previous setting can be used without a setting again in the next use.

Explanation is now made on the contents-server preparing section 214 of the information providing server apparatus 210. The contents provided by the information providing server apparatus 210 is transformed when the information terminal unit 200 requests to deliver the contents or by a transforming specification prepared by the transforming-specification preparing section 212 according to a user profile forwarded as a Cookie.

The following tags are defined on the characteristic items of user profile. Namely, definitions are given ud:font as text size, ud:img as image enlarge, ud:complexity as level of explanation, ud:sound as sound attach, ud:sound as voice supplementary information, such as attaching a voice file, and ud:KANJI as skill level of Chinese character or level for necessity of adding Ruby. The contents become accessible by embedding each of process and content corresponding to each tag into the contents when the contents are provided.

The respective attributes of tags are explained below, by using DTD (Document Type Definition).
ud:font and ud:image are respectively replaced with HTML font and HTML image tags, to describe the same attribute as them. In the following definitions, those described in lower case represent a ud tag and attribute. Concerning those described in upper case, !ATTLIST is representative of a declaration as a definition of attribute, CDATA is of character string information, #REQUIRED is of a necessity to set a value for the attribute, and #IMPLIED is of an omittability of attribute.

In a description <!ATTLIST ud:complexity level CDATA #REQUIRED> for example, it is shown that the ud complexity tag has an level attribute, the attribute being not to be omitted but to be set as a character string.

In a description <!ATTLIST ud:KANJI yomi("yomi" means "how to read chinese character") CDATA #REQUIRED level CDATA #REQUIRED>, it is shown that the ud:KANJI tag has an attribute of yomi and level, the attribute being not to be omitted but to be set as a character string.

For example, in the case of adding Ruby in level 4 to " (means "Handset")" written in Chinese character, description is <ud:KANJI level = "4" yomi = "juwaki" > </ ud:KANJI>.

In a description <!ATTLIST ud:sound src CDATA #REQUIRED autostart CDATA #IMPLIED width CDATA #IMPLIED height CDATA #IMPLIED>, the ud:sound tag has a non-omittable attribute representative of a soundfile name of src and an omittable attribute of autostart, width and height. Meanwhile, src is representative of a name of a soundfile, autostart is of a necessity/unnecessity to automatically start sound reproduction, and width and height are of a size of a presentation button. The tag, in a use example, is as follows.

In the case that a file name "sound/manu2-1. wav" is not to be automatically reproduced to display a presentation button having a height 26 and width 50, description is <ud:sound src = "sound/manu2-1. wav" height = "26" width = "50" autostart = "false">.

Next, in both of a description <!ATTLIST ud:img border CDATA #REQUIRED height CDATA #REQUIRED width CDATA> #REQUIRED src CDATA #REQUIRED alt CDATA #IMPLIED align (top | middle | bottom | left | right) #IMPLIED hspace CDATA #IMPLIED vspace CDATA #IMPLIED > usemap CDATA #IMPLIED ismap CDATA #IMPLIED» and a description <!ATTLIST ud:font size CDATA #REQUIRED color CDATA #IMPLIED>, it is possible to describe, as it is, an non-omittable attribute of size and an HTML-defined attribute of font, image. A use example of ud:font is shown in Figs. 5A - 5E, the explanation of which will be made later.

As a use example of ud:image, in the case that an image file name "image2/imanu2-1. gif" is displayed in an image size having a width 223 by a height 152 to designate a display position to "left" and output a sound "Call a Phone" as a comment on the image, description is <ud:img border = "0" src = "image2/imanu2-1. gif" width = "223" height = "152" align = "left" alt = "Call a Phone"/>.

Here, src is defined as an image file name, width and height are image sizes, and alt is a comment on the image. In the case that a visually disabled accesses information through his or her voice by using a text reader, a character string set in the alt is transformed into sound wherein the align shows a display position of figure.

In a description <!ATTLIST ud:sound level CDATA #REQUIRED>, it is shown that the ud:sound tag has an attribute of level, which is non-omittable and set as a character string. A use example of ud:sound is shown in Fig. 7, the explanation of which will be made later.

Because of using a tag defined uniquely, the contents are described in a structured description language XML (eXtensible Markup Language: XML) or a text structure description language XHTML (eXtensible HyperText Markup Language) introducing the flexibility and extensibility of XML into HTML or the like.

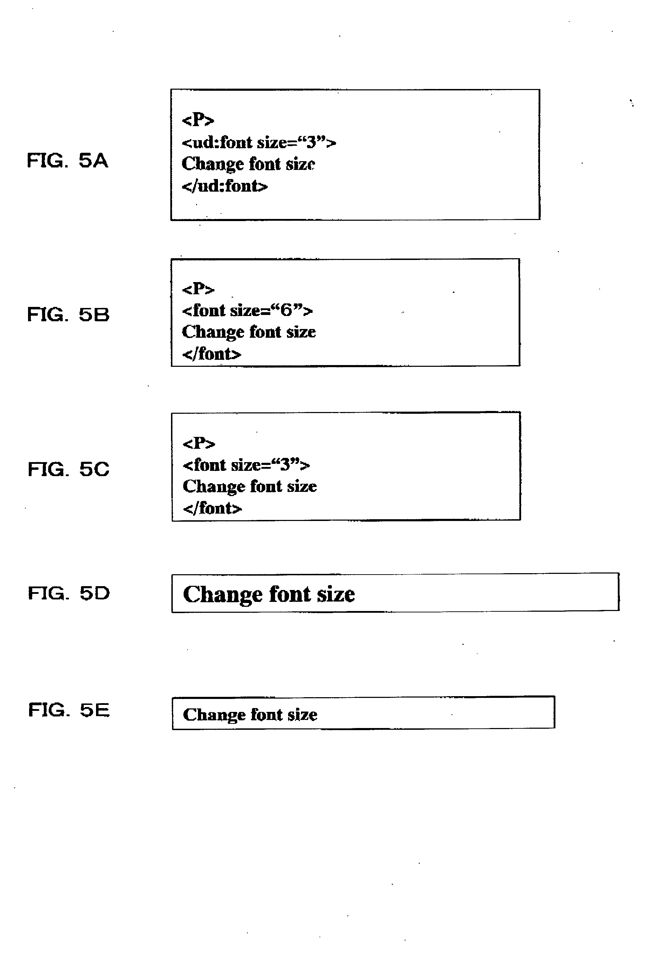

Fig. 5A shows a description of ud:font tag. Figs. 5B and 5C show a description of a prepared HTML. Figs. 5D and 5E show a display result.

First, Fig. 5A is a description of contents using a font-size concerned tag of ud:font, designating size = 3. The value designated by this size is reflected in a prepared HTML.

Next, Fig. 5B is an HTML set by font size = [Much Larger (3)] in the user profile. ud:font size = "3" is designated, which is added to a pre-transformation HTML font size "3" thus being turned into size = "6".

Fig. 5C is an HTML set by font size = [Usual (0)] in the user profile. ud:font size = "0" is designated, which is added to a pre-transformation HTML font size "3" thus being turned into size = "3".

Fig. 5D shows a display in an HTML set by font size = [Much Larger (3)], while Fig. 5E shows a display in an HTML set by font size = [Usual (0)].

As in the above, by using a ud:font tag, there is no need to previously prepare a plurality of HTMLs. By making reference to the user profile, an HTML can be displayed to fit to a user's preference.

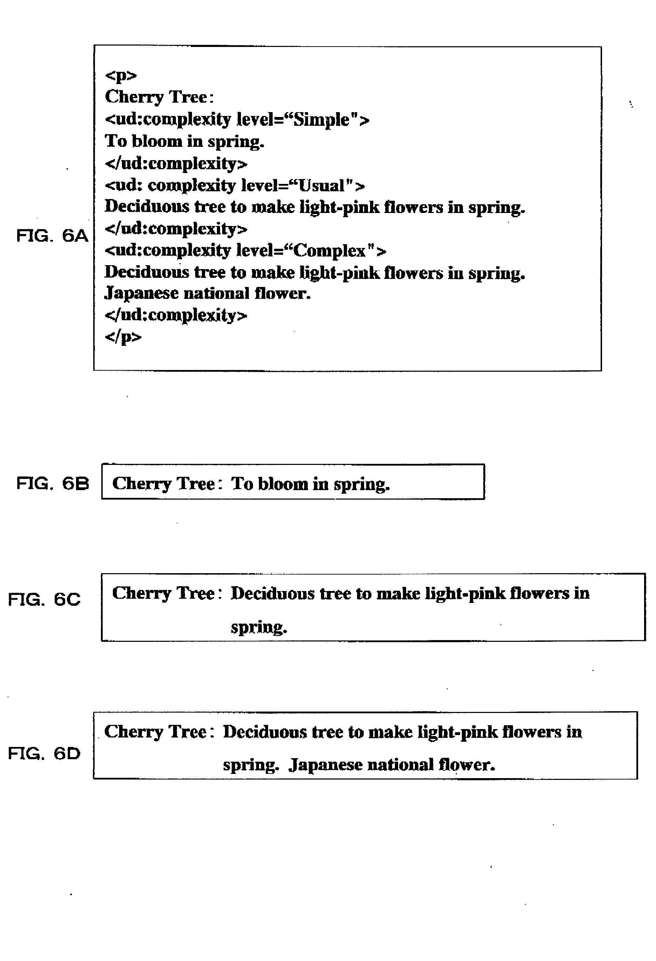

Figs. 6A - 6D show an example of contents description using a tag, concerning a content level, of ud: complexity. Fig. 6A shows a description of ud tag while Figs. 6B - 6D show contents on display by a description of ud tag.

With an HTML, various contents are selected and outputted according to a designation of level of explanation in the user profile. For example, Fig. 6B is on a case with designating level = "synopsis", displaying "Cherry Tree: Blooming in Spring". Fig. 6C is on a case with a designation of level = "normal", displaying "Cherry Tree: Deciduous Tree to Make Light-Pink Flowers in Spring". Fig. 6D is on a case with a designation of level = "complexity", displaying "Cherry Tree: Deciduous Tree to Make Light-Pink Flowers in Spring. Japanese National Flower".

Meanwhile, Figs. 7A - 7C show a description of contents concerning sound attach of ud:sound. Fig. 7A shows a description of contents on display while Figs. 7B and 7C show a sound attach on display.

Various contents are selected and outputted according to a designation of sound in the user profile. Fig. 7B is on a case of a designation of speech = "0" provided as alternative information "Second Right Button" without using visual information. Fig. 7C is on a case of a designation of speech = "1", wherein information together with using visual sensation, such as "Red Button", can be provided to a visually disabled or a user temporarily incapable of using visual information.

The contents thus prepared are stored in a contents-server storing section 215.

Explanation is now made in detail on the contents-server transforming section 211, by using a flowchart shown in Fig. 8. The contents-server transforming section 211 is configured with a transforming-specification (XSL) preparing section 212 to dynamically prepare a transforming specification (style sheet language XSL: eXtensible Style Language) of contents and a contents transforming section 213 to transform (XSLT: XSL-transformation) contents according to the transforming specification (XSL).

Since XML, describing a data structure, does not have layout information, there is a need to designate a style as to how an XML is displayed. As a style language for that, there is CSS (Cascating Style Sheets) for HTML and XHTML, and is XSL and the like for XML.

First, in the information terminal unit 200, a user profile is set in S601. Herein, setting may be at a start of process by the use of a Web profile-input page. Otherwise, Cookie may be used to utilize a profile previously set and stored in the information terminal unit 200. In case a user profile is entered and a URL address desired for reference is inputted in S602, the URL address and the user profile are both sent to the information providing server apparatus 210.

In the information providing server apparatus 210, the user-profile analyzing section 209 analyzes the user profile in S603. Analysis is made with an alphanumeric character string "323B155" shown in Fig. 4 that font size: 3 (much larger), image size: 2 (double), complexity: 3 (detailed), sound attach: B (both), contents for speech output: 1 (for sound attach) , skill level in Chinese character: 5 (primary fifth grader level) and level for necessity of Ruby addition: 5 (primary fifth grader level) are set.

Next, in S604, in the transforming-specification preparing section 212, a transforming file (XSL) as a display-style sheet is dynamically generated according to a user-profile analysis result when the user requests to provide information. Namely, the transforming-specification preparing section 212 dynamically generates a content-transforming specification (XSL) on the basis of the information acquired from the user profile.

XSL describes how to display contents described in XHTML, one example of which is shown in Figs 9A - 9C. By providing the information acquired from a user profile, as parameters, to a previously-prepared general-purpose XSL file, dynamically generated is an XSL file to generate contents suited for the user. Fig. 9A shows a description of ud tag, Fig. 9B a description of transformation and Fig. 9C a description of transformed contents.

In Fig. 9A, a font size "3" is described by a ud tag. Analyzing the user profile makes a setting of font size: 3 (much larger). Consequently, "3" is set to "font#enlarge".

In a transforming file of Fig. 9B, "3" is set as an initial value in "fontsize#base", so that "fontsize#base" and "font#enlarge" are added together into a description of "6". Thus, the contents font size is given as font size = "6", as shown in Fig. 9C.

Meanwhile, image size is basically defined by a size, similarly to font size. 1 and the like are properly selected from among a plurality of contents previously prepared, in accordance with a user's request.
"image size" is defined by a size, similarly to font tag. As for other tags, selection is properly made from among a plurality of contents previously prepared, in accordance with a user's request, same as complexity explained in FIG. 6.

The content transforming section 213, in S606, acquires tag-added contents and transforms (XSLT: XSL-Transforms) the contents into a format (HTML, C-HTML) for display on the information terminal unit 200 according to the transforming file prepared in S604. The contents transforming section 213 transforms the contents (XHTML or XML) stored in the contents-server storing section 215 on the basis of the transforming-specification (XSL) dynamically generated according to the user profile by the transforming-specification preparing section 212.

Here, the contents are transformed into a form for provision in a required format to a destination of forwarding (HTML, C-HTML or voice) . The XSLT in the content transforming section 213 exhibits a function to transform an XML (including an XHTM) according to the transforming specification XSL.

Fig. 9C shows that a tug of ud:font size = "3" is transformed into an HTML tag of font size = "6" depending on a transforming specification (XSL) and outputted to contents.

The contents transformed by the contents transforming section 213 in S605 is delivered, in S607, to the information terminal unit 200 by the communicating section 216. On the side of the information terminal unit 200, the contents received in S608 are displayed to the user.

Explanation is now made on the information providing section 203 of the information terminal unit 200. The information terminal unit 200 at the communicating section 204 receives contents generated/transformed according to a user profile in the information providing server apparatus 210, through the network 100. The information presentation section 203 presents the received contents into text/video information on a monitor screen and audio information through a speaker or the like. Figs. 5D - 5E and 6B - 6D show an example of information provided according to a user profile. Fig. 5D shows a state of display when font size is designated to [Much Larger (3)] in a user profile while Fig. 5E shows that when set to [Usual (0)]. Fig. 6B shows a content on display when level of explanation is designated to [Synopsis], Fig. 6C shows that when to [Normal] and Fig. 6D shows that when to [Detail].

In the above was explained the case that a user profile prepared in the user-profile setting section 201 is forwarded to the information providing server apparatus 210 through the network 100. However, the prepared user profile may be forwarded by being stored to a storing medium such as a Flexible disk. Meanwhile, a user-profile registering sheet marked with setting items may be forwarded to the information providing server apparatus 210 so that input/storage can be made on the side of the information providing server 210.

Meanwhile, each user-profile setting section 201 may be arranged in the information providing server apparatus 210 so that designation can be made on each item by invoking it onto Web.

Incidentally, it is possible for the user to hold his or her own profile on an IC card or RF ID (radiofrequency identification) tag where in the function to read the information is provided on the side of the information terminal unit in order to input it to the information terminal unit.

In this manner, by transforming contents through a user profile set with how to present information fitting to user's preference and individuality, the followings are made feasible.

First, instead of partial magnification as with a magnifier, the character font can be legibly magnified while maintaining the overall structure of contents.

Second, in the case of magnifying font size, there is limitation in amount of the information to be displayed on a screen of the information terminal unit. By summarizing a display content, information can be provided without causing troublesome scrolling or the like. Also, it is possible to avoid irregular, illegible layout.

Third, In the case that a visually disabled accesses information by text reader, omitting unwanted image information reduces the time to provide information. Also it is possible to provide high accessible informations by preparing previously set alternative information as visual information such as "As In Figure" or "Red Button". Furthermore, the order and contents of presentation information can be changed for easy understanding in listening through voice.

Fourth, by the function of how to use a chinese character or adding Ruby to a difficult chinese character, it is possible to broaden information users to the users who are sensibly disabled, children and those not native to Japanese language.

Fifth, because accessible contents are previously prepared and at the same time a unit for utilizing it is provided, the problem resulting from the contents can be eliminated.

Sixth, after contents delivery has been requested by the information terminal unit to send a user profile to the information providing server apparatus, a transforming specification is dynamically generated and further contents for delivery is dynamically transformed. Accordingly, there is no need to previously prepare transforming specifications for a plurality of users. Thus, it is possible to reduce the capacity of the contents storage section of the information providing server apparatus, and to reduce the burden of contents search on the information providing server apparatus.

Seventh, there is no necessary to provide a plurality of contents corresponding to each of user's preferences or profiles, so that it is possible to manage the contents unitarily.

### 2. Second Exemplary Embodiment

Fig. 10 is a view showing a configuration of an information providing system according to a second embodiment of the invention. This system is configured with an information terminal unit 200 to present information, an information providing relay apparatus 820 having a function to receive information, to transform the information according to a user profile and to send the transformed information to the information terminal unit, and an information providing server apparatus 810 to send information to the information providing relay apparatus 820. The same elements as those of Fig. 2 are attached with the same references, to omit explanation.

A contents-for-relay transforming section 802 is provided not in the information providing server apparatuses 810a, 810b, 810c respectively having contents storing sections 803a, 803b, 803c but in the information providing relay apparatus 820 between the information terminal unit 200, as clients 102 - 104, and the information providing server apparatus 810.

The information providing servers 810a - 810c respectively have the respective contents storing sections 803a - 803c to store information. Information is provided from a communicating section 813 to the information providing relay apparatus 820 through a network 100. The information providing relay apparatus 820 receives the information sent from the information providing server apparatus 810a - 810c through the communicating section 812, and transforms contents according to a user profile by the contents-for-relay transforming section 802 and sends them to the information terminal unit 200 via the communicating section 811.

The other configurations and operations, such as user profile setting and contents transformation according to user profiles, are similar to those of Embodiment 1, and hence omittedly explained.

This configuration makes it possible to optimally provide information terminal unit 200 with the information of a plurality of contents described by using defined tags and stored in the contents storing sections 803a - 803c on the respective information providing server apparatuses 810a - 810c, according to the user profiles.

Meanwhile, by providing a contents transforming section 802 to the information providing relay apparatus 820, it is possible to receive contents fitting to users' individualities from the plurality of information providing server apparatuses 810a - 810c.

### 3. Third Exemplary Embodiment

Fig. 11 is a view showing a configuration of an information providing system according to a third embodiment of the invention. This embodiment is basically configured with an information terminal unit and an information providing server apparatus, similarly to the first embodiment. The same elements as those of Fig. 2 are attached with the same references, to omit explanation.

In this embodiment, a contents-for-terminal transforming section 902 is provided not in an information providing server apparatus 910 having a contents-server storing section 215 but in an information terminal unit 900 as clients 102 - 104.

The contents, delivered from the information providing server apparatus 910 through a network 100, is received by a communicating section 204 of the information terminal unit 900. In a contents-for-terminal converting section 902, the received contents are transformed by using a user profile and outputted to an information presentation section 203. An information presentation section 203 presents the contents transformed in a display form suited for a user's preference and individuality.

The other configurations and operations, such as user profile setting and contents transformation according to user profiles, are similar to those of Embodiment 1, and hence omittedly explained.

The information terminal unit 900 once stores the contents gained through a storage media 912, such as a CD or DVD, besides the contents previously delivered from the information providing server apparatus 910, in a contents-for-terminal storing section 909 thereof. In the contents-for-terminal transforming section 902, the contents are transformed and presented, as required, into a presentation form suited for a user's preference and individuality by the use of a user profile.

According to this configuration, contents within the information terminal unit 900, such as a help, an on-line manual for the unit 900 or a manual of software installed in the unit 900 are provided optimally according to the user profile by transforming the contents with the tag defined by a user profile.

Meanwhile, because contents transformation are made on the information terminal unit 900, it is possible to relieve the burden imposed on the side of the information providing server apparatus 910 in the event of a concentration of delivery requests on the information providing server apparatus 910.

Also, the contents stored on a storage medium, such as a CD or DVD, can be adapted to a user profile solely on the side of the information terminal unit 900.

### 4. Fourth Exemplary Embodiment

Fig. 12 is a view showing a configuration of an information providing system according to a fourth embodiment of the invention. This embodiment is basically configured with an information terminal unit and an information providing server apparatus, similarly to the first embodiment. The same elements as those of Fig. 2 are attached with the same references, to omit explanation.

An information providing server apparatus 1010 is connected with a plurality of information terminal unites 1000a - 1000c through a network. For the information terminal unites 1000a - 1000c, various configurations can be utilized, e.g. an information terminal unit 1000a configured by a personal computer including a monitor and a speaker, a mobile information terminal unit 1000b such as a cellular phone or PDA, or an information terminal unit 1000c configured by a telephone set for only voice communication.

The information terminal unites 1000a - 1000c are configured with user-profile setting sections 1001a - 1001c and terminal-unit profile setting sections 1012a - 1012c, so that contents can be transformed by using both of a user profile and a terminal-unit profile. For a terminal profile, setting is to be made on the items of presence or absence of a screen, screen size, number of display colors, communication speed and so on.

In this embodiment, a terminal-unit profile is generated to the performance of a monitor, speaker and the like of an information providing sections 1004a - 1004c of information terminal unites 1000a - 1000c by a terminal-unit profile setting sections 1012a - 1012c. The generated terminal-unit profile, at a communicating section 204, is forwarded together with a user profile to the information providing server apparatus 1010 via a network 100.

The information providing server apparatus 1010, at a profile analyzing section 209, analyzes the respective description contents of the terminal-unit and user profiles of from the information terminal unites 1000a - 1000c. In a contents transforming section 213, the contents from the contents-server storing section 215 is transformed into contents suited for a user's preference and individuality and a terminal-unit display capability by the use of a result of the analysis by the profile analyzing section 209. The transformed contents are delivered by the communicating section 216 to the information terminal unites 1000a - 1000c via the network 100. The delivered contents, on the information terminal unites 1000a - 1000c, can be presented into information suited for the user's preference and individuality and terminal-unit performance.

Setting of user and terminal-unit profiles and contents conversion method according to a user and terminal-unit profile are similar to those of Embodiment 1, and hence omittedly explained.

This embodiment makes it possible to carry out a contents transformation taking both a terminal-unit profile and a user profile into consideration. Due to this, it is possible to provide optimal information that is accessible by every user and adapted for a user terminal characteristic, such as screen size and voice information, and a user's preference and individuality.

### 5. Fifth Exemplary Embodiment

Fig. 13 is a view showing a configuration of an information providing system according to a fifth embodiment of the invention. This embodiment is basically configured with an information terminal unit and an information providing server apparatus, similarly to the first embodiment. The same elements as those of Fig. 2 are attached with the same references, to omit explanation. The difference from Fig. 2 lies in that, in place of the contents-server storing section 215, used is an instruction manual information storing section 1301 to store information about an instruction manual. This embodiment is a system to electronically provide an instruction manual in an optimal form suited for a user's individuality.

Although an instruction manual is usually packaged as a brochure when purchasing various appliances, there are frequent opinions of troublesomeness in keeping it. Furthermore, there is a problem that the visually disabled cannot use it. Meanwhile, although there are increasing opportunities to electronically provide instruction manuals through the Internet, they in many cases are mere instruction-manual brochures simply made in PDF (Portable Document Format: PDF) not to be easily used by the user.

This embodiment, for solving the problem, makes it possible to prepare an instruction manual that can easily be used by the individual user. The user is allowed to make a setting of a profile best suited for the user, including font size, image size, complexity (level of explanation), presence or absence of sound attach and skill level of Chinese character with the user profile setting section 201. Then, the profile setting items and set profile are stored as a Cookie. In case once saved, the set profile can be utilized in the next time. The configuration and operation are similar to that of the first embodiment.

The information providing server apparatus 210 for providing an instruction manual dynamically generates a transforming specification XSL according to the set profile similarly to that of Embodiment 1, and provides previously accessibly described contents as an HTML document transformed into a content fitting to a user's individuality.

Explanation is made with greater detail on an example of an instruction manual for a telephone set. This embodiment uses the ud:complexity tag in the following three levels. One example of contents description is shown in Figs. 14A - 14C. Fig. 14a shows Level = 1 representing to provide an instruction manual as image information. Fig. 14B shows Level = 2 wherein the content of the instruction manual is made in HTML. Fig. 14C shows Level = 3 for conversion into a content suited for audibly reading out the content of the instruction manual is utilized by text-reading software.

Concerning the content suited for audible reading out, basically utilized is a tag ud:sound to customize the content for sound attach. However, this embodiment is concerned with an instruction manual of telephone set comparatively easy in content, and hence the level of content is given in one level.

Meanwhile, customization for sound attach is made by using a tag of ud:complexity. In the sound attach application, it is possible to provide an instruction manual with a content/style suited for audibly reading out. For example, in listening expressions, e.g. "Take", "Dial" or the like through voice, transformation is made into polite expressions "Take Handset", "Dial the number" or so which are easy to understand.

Meanwhile, alternative/additional information can be supplied for the information requiring the sense of sight. For example, for information "Push Re-dial Button", the information about a button position and shape can be provided , e.g. "Re-dial Button is Second Right of Horizontally-long Function Buttons Below Auto-dial Button in the Telephone Upper Part".

Meanwhile, there is a function of providing a content as a voice file so that a user not having text-reading software can utilize sound attach. Voice files are previously prepared in the information providing server apparatus 210. Owing to the function of provision with a voice file, it is possible for an aged one or child, who is not easy to read characters, to know the content.

Sound attach is realized by designating a voice file name with using <ud:sound src = "filename. wav">.

Also, by using a ud:KANJI tag, it is possible to select "Level of adding Ruby to Chinese character" or "Level of transforming Chinese character into KANA".

There are shown, in Figs. 15A - 15D, display examples in Japanese corresponding to various levels in providing information according to the embodiment. The user profile in each display example is set as in the following.

Fig. 15A is in a setting of complexity level = 1 displaying an instruction manual as it is, in order to make a quick display. Fig. 15B is in a setting of complexity level = 2, wherein display is made with a font size "Much Larger". Fig. 15C is also in a setting of complexity level = 2, wherein rubies are added to Chinese characters in a primary second grader level and large font size. Fig. 15D is in a setting of complexity level = 3 for presentation by speech and sound, using alternative/supplementary information for visual disability is added.

In this manner, by providing an instruction manual with customization in both appearance and content to a user profile, the user can easily utilize it. Furthermore, it is possible to broaden the bracket of users capable of utilizing the instruction manual.

Meanwhile, because of generating a only transforming specification requested for delivery, it is possible to reduce the preparation of wasteful contents.

The above embodiments explained the method that a user makes a setting of a user profile concerning font size, explanation level and the like by using an input screen on the information terminal unit 200. However, a user profile can be set by data-transferring a user profile previously set onto a card, transponder, cellular phone or the like.

Meanwhile, instead of direct setting of font size or the like, an optimal user profile can be set by inputting a user's eye sight and hearing ability.

Furthermore, a user profile can be set through selecting an optimal one from various generated pages.

Also, as the information terminal unit, those ranging from, of course, a personal computer to a personal and home-use appliance such as a TV set, PDA, cellular phone or a public-service information terminal unit such as an ATM, ticket dispenser or KIOSK can be used.

As in the above, according to the present invention, it is possible to eliminate digital divide by providing optimal information suitably for user individuality, through preparation of characteristic tag and accessible contents previously embedded with a process corresponding to a user's individuality.

## Claims

1. An information providing server apparatus comprising:
storing means for storing contents to be provided;
transforming-specification generating means for dynamically generating a transforming specification of the contents according to a user profile describing a presentation form of contents fitting to a preference of a user;
contents transforming means for dynamically transforming the contents according to the transforming specification; and
communicatingmeans for delivering transformed contents.

2. An information providing server apparatus according to claim 1, wherein the user profile is a setting of an optimal value to at least one of information presentation manner and characteristics information contents,
the information presentation manner including text size, coloration, image size, layout and a necessity/unnecessity of sound attach, and
the characteristics information contents including level of content explanation, contents for speech output and way of dealing with a Chinese character.

3. An information providing server apparatus according to claim 1, wherein a characteristic tag corresponding to a characteristic of a user profile is previously defined, the contents being previously described with the characteristic tag and a process upon tag designation.

4. An information providing server apparatus comprising:
storing means for storing contents to be provided;
transforming-specification generating means for dynamically generating a transforming specification of the contents according to a user profile describing a presentation form of the contents fitting to a preference of a user and to a terminal unit profile set with a characteristic of an information terminal unit of the user;
contents transformingmeans for dynamically transforming the contents according to the transforming specification; and
communicating means for delivering transformed contents.

5. An information providing server apparatus according to claim 4, wherein the user profile is a setting of an optimal value to at least one of information presentation manner and characteristics information contents,
the information presentation manner including text size, coloration, image size, layout and a necessity/unnecessity of sound attach, and
the characteristics information contents including level of content explanation, contents for speech output and way of dealing with a Chinese character.

6. An information providing server apparatus according to claim 4, wherein a characteristic tag corresponding to a characteristic of a user profile is previously defined, the contents being previously described with the characteristic tag and a process upon tag designation.

7. In an information terminal unit having information presentation means to reproduce contents received from an information providing server, the information terminal unit comprising:
user profile setting means for setting a user profile describing a presentation form of contents fitting to a preference of a user; and
means for sending contents presentation form set in the user profile setting means to the information providing server.

8. An information terminal unit according to claim 7, wherein the contents presentation form is an optimal value to at least one of characteristics of information contents including text size, coloration, image size, layout and a necessity/unnecessity of sound attach, and
the characteristics information contents including level of content explanation, contents for speech output and way of dealing with a Chinese character.

9. An information terminal unit according to claim 7, wherein a characteristic tag corresponding to a characteristic of a user profile is previously defined, the contents being previously described with the characteristic tag and a process upon tag designation.

10. An information terminal unit comprising:
means for setting a user profile describing a presentation form of contents to be provided;
storing means for storing the content;
transforming specification generating means for dynamically generating a transforming specification of the contents according to a user profile describing a presentation form of information fitting to a preference of a user when a request is made to present the contents;
contents transformingmeans for dynamically transforming the contents according to the transforming specification when a request is made to present the contents; and
presentation means for presenting a transformed contents.

11. An information terminal unit according to claim 10, wherein the user profile is a setting of an optimal value to at least one of the following characteristics: information contents including text size, coloration, image size, layout and a necessity/unnecessity of sound attach, and
the characteristics information contents including level of content explanation, contents for speech output and way of dealing with a Chinese character.

12. An information terminal unit according to claim 10, wherein a characteristic tag corresponding to a characteristic of a user profile is previously defined, the contents being previously described with the characteristic tag and a process upon tag designation.

13. In an information providing system connecting between a plurality of clients to which information is delivered, and an information providing server apparatus for providing information by a communication network, the information providing system wherein
the client comprises:
means for setting a user profile describing a presentation form of information; and
presentation means for presenting information provided from the server; and
the information providing server apparatus comprises:
storing means for storing contents to be provided;
transforming specification generating means for dynamically generating a transforming specification of the contents according to a user profile describing a presentation form of information fitting to a preference of a user;
contents transforming means for dynamically transforming the contents according to the transforming specification; and
communicating means for delivering transformed contents.

14. An information providing system according to claim 13, wherein the user profile is a setting of an optimal value to at least one of the following characteristics: information contents including text size, coloration, image size, layout and a necessity/unnecessity of sound attach, and
the characteristics information contents including level of content explanation, contents for speech output and way of dealing with a Chinese character.

15. An information providing system according to claim 13, wherein a characteristic tag corresponding to a characteristic of a user profile is previously defined, the contents being previously described with the characteristic tag and a process upon tag designation.

16. In an information providing system connecting between an information providing server apparatus for providing information and a plurality of clients to which information is delivered, by a communication network, the information providing system wherein
the information providing server apparatus comprises:
storing means for storing contents to be provided; and
communicating means for delivering the contents; and
the client comprises:
means for setting a user profile describing a presentation form of information;
transforming specification generating means for dynamically generating a transforming specification of a delivered contents according to a user profile describing a presentation form of information fitting to a preference of a user;
contents transformingmeans for dynamically transforming the delivered contents according to the transforming specification; and
presentation means for presenting transformed contents.

17. An information providing system according to claim 16, wherein the user profile is a setting of an optimal value to at least one of the following characteristics: information contents including text size, coloration, image size, layout and a necessity/unnecessity of sound attach, and
the characteristics information contents including level of content explanation, contents for speech output and way of dealing with a Chinese character.

18. An information providing system according to claim 16, wherein a characteristic tag corresponding to a characteristic of a user profile is previously defined, the contents being previously described with the characteristic tag and a process upon tag designation.

19. An information providing system having a plurality of information providing server apparatuses for providing contents as information to be provided, a relay apparatus for relaying to deliver the contents and a plurality of clients to which information is delivered from the relay apparatus,
the information server apparatus comprising:
storing means for storing the contents; and
communicating means for delivering the contents to the relay apparatus;
the relay apparatus comprising:
transforming specification generating means for dynamically generating a transforming specification of the contents delivered from the information providing server apparatus according to a user profile describing a presentation form of information fitting to a preference of a user when a request is made to present the contents; and
contents transforming means for dynamically transforming the delivered contents according to the transforming specification when a request is made to present the contents; and
the client comprising:
presentation means for presenting the contents delivered from the relay apparatus.

20. An information providing system according to claim 19, wherein the user profile is a setting of an optimal value to at least one of the following characteristics: information contents including text size, coloration, image size, layout and a necessity/unnecessity of sound attach, and
the characteristics information contents including level of content explanation, contents for speech output and way of dealing with a Chinese character.

21. An information providing system according to claim 19, wherein a characteristic tag corresponding to a characteristic of a user profile is previously defined, the contents being previously described with the characteristic tag and a process upon tag designation.

22. An information providing method comprising the steps of:
when a request is made to deliver contents, dynamically generating a transforming specification of the content stored according to a user profile describing a presentation form of information fitting to a preference of a user; and
transforming and delivering the stored contents according to the transforming specification.

23. An information providing method according to claim 22, wherein the user profile is a setting of an optimal value to at least one of the following characteristics: information contents including text size, coloration, image size, layout and a necessity/unnecessity of sound attach, and
the characteristics information contents including level of content explanation, contents for speech output and way of dealing with a Chinese character.

24. An information providing method according to claim 22, wherein a characteristic tag corresponding to a characteristic of a user profile is previously defined, the contents being previously described with the characteristic tag and a process upon tag designation.

25. An information presentation method comprising the steps of:
when a request is made to deliver contents, dynamically generating a transforming specification of the contents stored according to a user profile describing a presentation form of information fitting to a preference of a user; and
presentation contents dynamically transformed from the stored contents according to the transforming specification.

26. An information presentation method according to claim 25, wherein the user profile is a setting of an optimal value to at least one of the following characteristics: information contents including text size, coloration, image size, layout and a necessity/unnecessity of sound attach, and
the characteristics information contents including level of content explanation, contents for speech output and way of dealing with a Chinese character.

27. An information presentation method according to claim 25, wherein a characteristic tag corresponding to a characteristic of a user profile is previously defined, the contents being previously described with the characteristic tag and a process upon tag designation.

28. An instruction manual information providing apparatus comprising:
means for storing instruction manual information as contents to be provided;
transforming specification generating means for dynamically generating a transforming specification of the instruction manual information stored according to a user profile describing a presentation form of the instruction manual information fitting to a preference of a user;
contents transforming means for dynamically transforming the instruction manual information stored according to the transforming specification; and
communicating means for delivering the transformed instruction manual information.

29. An instruction manual information providing apparatus according to claim 28, wherein the transforming specification generating means dynamically generates a transforming specification, the contents converting means dynamically preparing the contents according to the transforming specification.

30. An instruction manual information providing apparatus according to claim 28, wherein the user profile is a setting of an optimal value to at least one of the following characteristics: information contents including text size, coloration, image size, layout and a necessity/unnecessity of sound attach, and
the characteristics information contents including level of content explanation, contents for speech output and way of dealing with a Chinese character.

31. An instruction manual information providing apparatus according to claim 28, wherein a characteristic tag corresponding to a characteristic of a user profile is previously defined, the contents being previously described with the characteristic tag and a process upon tag designation.
